(19) Europäisches Patentamt
European Patent Office
Office européen des brevets

(11) **EP 2 994 968 B1**

(12) **FASCICULE DE BREVET EUROPEEN**

(45) Date de publication et mention de la délivrance du brevet:
**01.03.2017 Bulletin 2017/09**

(51) Int Cl.:
***H02H 7/18*** *(2006.01)*   ***H02H 3/087*** *(2006.01)*
***H01M 2/34*** *(2006.01)*   *H01M 10/42* *(2006.01)*

(21) Numéro de dépôt: **14720082.8**

(22) Date de dépôt: **24.04.2014**

(86) Numéro de dépôt international:
**PCT/EP2014/058304**

(87) Numéro de publication internationale:
**WO 2014/180662 (13.11.2014 Gazette 2014/46)**

(54) **PROTECTION D'UNE ALIMENTATION INCLUANT PLUSIEURS BATTERIES EN PARALLÈLE CONTRE UN COURT CIRCUIT EXTERNE**

SCHUTZ EINER STROMVERSORGUNG MIT MEHREREN PARALLEL GESCHALTETEN BATTERIEN GEGEN ÄUSSEREN KURZSCHLUSS

PROTECTION OF A POWER SUPPLY INCLUDING A PLURALITY OF BATTERIES IN PARALLEL AGAINST AN EXTERNAL SHORT CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2013 FR 1354205**

(43) Date de publication de la demande:
**16.03.2016 Bulletin 2016/11**

(73) Titulaire: **Commissariat à l'Énergie Atomique et aux Énergies Alternatives**
**75015 Paris (FR)**

(72) Inventeurs:
• **CHATROUX, Daniel**
  **F-38470 Teche (FR)**
• **CARCOUET, Sébastien**
  **F-38450 Vif (FR)**
• **DAUCHY, Julien**
  **F-38430 Moirans (FR)**

(74) Mandataire: **Guérin, Jean-Philippe**
**Innovation Competence Group**
**310 bis avenue Berthelot**
**69008 Lyon (FR)**

(56) Documents cités:
**EP-A2- 0 810 710       WO-A1-2011/076257**
**WO-A1-2012/171917**

**Description**

L'invention concerne les sources de tension continue de forte puissance, en particulier les sources de tension incluant des batteries d'accumulateurs électrochimiques de puissance connectées en parallèle. Celles-ci peuvent par exemple être utilisées dans le domaine des transports en commun (bus ou trolley-bus), dans le domaine du stockage d'énergies renouvelables, dans le domaine de la navigation maritime ou encore dans les alimentations de secours pour des centrales thermiques ou pour des centres de données .

Les niveaux de tension nécessaires pour de telles applications dépassent souvent plusieurs centaines de Volts. De telles sources de tension sont le plus souvent basées sur des accumulateurs électrochimiques du type lithium ion pour leur capacité à stocker une énergie importante avec un poids et un volume contenus. Les technologies d'accumulateurs de type Lithium ion phosphate de fer LiFePO4 font l'objet d'importants développements du fait d'un niveau de sécurité intrinsèque élevé, au détriment d'une densité de stockage d'énergie un peu en retrait.

Un accumulateur électrochimique a habituellement une tension nominale de l'ordre de grandeur suivant :

    3.3 V pour une technologie lithium-ion phosphate de Fer, LiFePO4,
    4.2 V pour une technologie de type lithium-ion à base d'oxyde de cobalt.

Par conséquent, pour atteindre les niveaux de tension souhaités, on connecte de nombreux accumulateurs électrochimiques en série. Pour obtenir de fortes capacités, on place de nombreux accumulateurs électrochimiques en parallèle. L'association de plusieurs accumulateurs est appelée une batterie d'accumulateurs.

Dans certaines applications, les puissances mises en oeuvre dépassent 100kWh. Par exemple, les puissances suivantes peuvent être mises en oeuvre dans des batteries de stockage : 200kWh pour la propulsion d'un bus, entre 100kWh et plusieurs MWh pour un stockage associé à un générateur d'énergie renouvelable, plus de 100kWh pour un stockage de secours dans des centrales thermiques ou des parcs informatiques. Il est alors compliqué (notamment en terme d'encombrement) et dangereux de fabriquer et de transporter des sources de tension de très forte capacité en un seul bloc. C'est pourquoi il est usuel de séparer les sources de tension en plusieurs batteries présentant une capacité unitaire inférieure à 50kWh. Plusieurs batteries sont alors connectées en parallèle et/ou en série en fonction du dimensionnement souhaité pour la tension nominale et/ou la capacité de la source de tension, ce qui facilite leur fabrication et leur transport.

Les batteries, en particulier celles utilisant des accumulateurs de type lithium-ion, présentent une très faible résistance interne. Ainsi, en cas de court-circuit aux bornes de la source de tension (typiquement un court-circuit dans l'installation électrique), le courant que les batteries sont susceptibles de fournir peut atteindre des valeurs très élevées. Pour des applications de forte puissance, on utilise des disjoncteurs électromécaniques pour protéger l'installation électrique et les charges électriques contre le court-circuit. De tels disjoncteurs ont un pouvoir de coupure limité. Les disjoncteurs électromécaniques présentent un pouvoir de coupure supérieur à 30 kA présentent un coût particulièrement élevé. En outre, le pouvoir de coupure des disjoncteurs électromécaniques du commerce est actuellement limité à une valeur de 100 kA. En cas de court-circuit externe, les batteries sont susceptibles de fournir un courant supérieur au pouvoir de coupure du disjoncteur électromécanique ou imposent d'utiliser un disjoncteur électromécanique particulièrement coûteux. La faisabilité d'une installation avec de telles sources de tension continue tout en respectant les normes de protection électrique est ainsi problématique.

Par ailleurs, le courant de court-circuit fourni par les batteries à l'installation électrique doit rester suffisant pour permettre le déclenchement et l'ouverture des disjoncteurs électromécaniques.

Le document EP0810710 décrit un système d'alimentation électrique comprenant une source de tension et une charge électrique. Un interrupteur semi-conducteur est connecté entre un pôle de la source de tension et la charge électrique. La sortie de l'interrupteur semi-conducteur est connectée à une source de courant. Des charges électriques sont connectées directement à la source de courant, sans interrupteur de sécurité intermédiaire. L'interrupteur est régulé par un microcontrôleur à partir d'une mesure numérique du courant à la sortie de cet interrupteur.

Le document WO2011/076257 décrit une batterie munie d'une protection contre les court-circuits. La batterie comprend des éléments connectés en série, chaque élément incluant un interrupteur semi-conducteur. Un circuit de commande est connecté aux interrupteurs semi-conducteurs pour les contrôler.

Le document WO2012/171917 décrit un système pour sécuriser la connexion de modules de batteries. Chaque élément de batterie comporte deux bornes et plusieurs cellules électrochimiques appliquant une tension entre deux pôles. Le module comprend en outre un dispositif de sécurité incluant des premier et deuxième interrupteurs connectés en série entre les premier et deuxième pôles. Un premier interrupteur est du type normalement fermé et le deuxième interrupteur est du type normalement ouvert. L'interrupteur normalement ouvert est configuré pour sélectivement connecter/isoler mutuellement le premier pôle et la première borne. L'interrupteur normalement fermé est configuré pour sélectivement connecter/isoler mutuellement les première et deuxième bornes. Le signal de commande de l'interrupteur normalement fermé est une tension appliquée par les cellules électrochimiques.

L'invention vise à résoudre un ou plusieurs de ces inconvénients. L'invention porte notamment sur une Installation électrique telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un premier mode de réalisation d'une installation électrique selon l'invention ;
- la figure 2 est une représentation schématique d'un deuxième mode de réalisation d'une installation électrique selon l'invention ;
- la figure 3 est une représentation schématique d'une variante de batterie d'accumulateurs électrochimiques pour une installation électrique selon l'invention ;
- la figure 4 est une première variante d'un circuit de commutation pour abaisseur de tension de la batterie de la figure 3 ;
- la figure 5 est une deuxième variante d'un circuit de commutation pour abaisseur de tension de la batterie de la figure 3 ;
- la figure 6 illustre schématiquement une première variante d'interrupteur commandé pour une batterie ;
- la figure 7 illustre schématiquement une deuxième variante d'interrupteur commandé pour une batterie ;
- la figure 8 illustre schématiquement une troisième variante d'interrupteur commandé pour une batterie ;
- la figure 9 illustre schématiquement une quatrième variante d'interrupteur commandé pour une batterie ;
- les figures 10 et 11 sont des représentations schématiques d'autres variantes de batteries d'accumulateurs électrochimiques pour une installation électrique selon l'invention ;
- la figure 12 est un exemple de diagramme de déclenchement pour un exemple de disjoncteur utilisable dans une installation électrique selon l'invention.

L'invention propose une installation électrique comportant une source de tension continue munie de batteries d'accumulateurs électrochimiques connectées en parallèle. Ces batteries sont connectées en parallèle, la source de tension continue formée étant connectée en série avec un disjoncteur dont le pouvoir de coupure est inférieur à la somme des courants de court-circuit de ces batteries. En détectant que le courant traversant le disjoncteur est supérieur à son courant de déclenchement, on commande l'ouverture d'interrupteurs respectifs connectant des batteries au disjoncteur, pour appliquer à travers le disjoncteur un courant supérieur à son courant de déclenchement et inférieur à son pouvoir de coupure.

Ainsi, on peut détecter un court-circuit externe à la source de tension continue en un temps très bref et maintenir un courant à travers le disjoncteur suffisamment élevé pour le déclencher et suffisamment bas pour garantir son ouverture. Le disjoncteur assure donc encore ses fonctions de sécurité, telles que d'ouvrir le circuit (et d'absorber l'énergie inductive à l'ouverture) en présence d'un court-circuit, d'assurer une coupure physique du circuit, et éventuellement de permettre à l'utilisateur de vérifier l'état de la coupure. Un disjoncteur ayant un pouvoir de coupure inférieur à la somme des courants de court-circuit des batteries en parallèle peut être utilisé tout en garantissant la sécurité de fonctionnement de l'installation électrique. Par conséquent, la faisabilité d'installations électriques de forte puissance est rendue possible avec des disjoncteurs existants ou des disjoncteurs moins coûteux peuvent être utilisés. Une architecture simple de l'installation électrique peut être conservée. En outre, la sélectivité de disjoncteurs de moindre calibre en aval d'un disjoncteur principal est conservée.

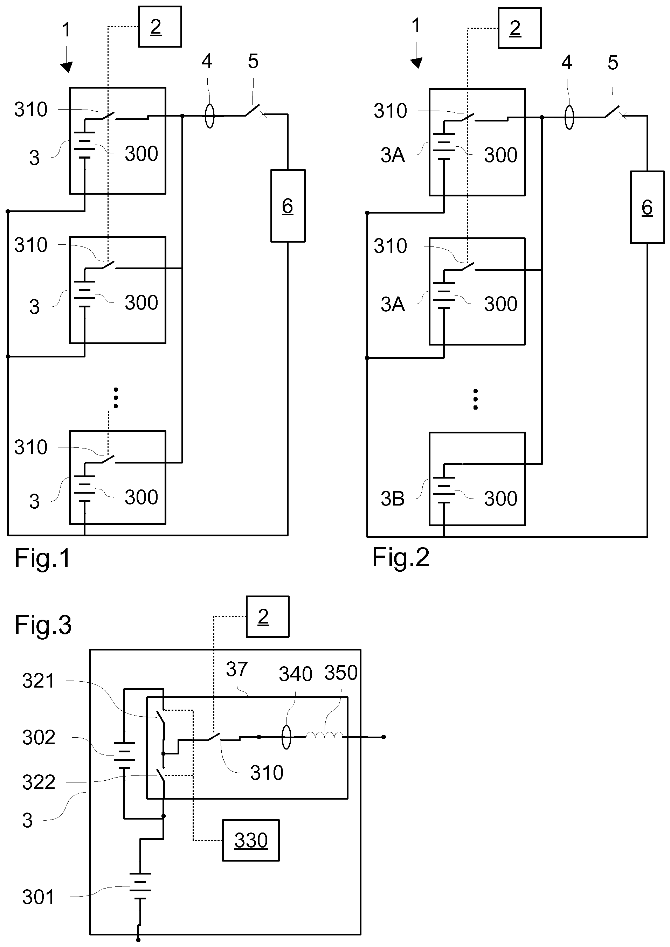

La figure 1 est une représentation schématique d'un premier mode de réalisation d'une installation électrique 1 selon l'invention. L'installation électrique 1 comprend un disjoncteur 5 et une charge 6 connectée en série avec le disjoncteur 5. L'installation électrique 1 comprend en outre un ampèremètre 4 mesurant le courant traversant le disjoncteur 5 et la charge 6. L'installation électrique 1 comprend en outre une source de tension continue. La source de tension continue comprend un ensemble de batteries 3 (sous forme de modules indépendants) connectées électriquement en parallèle. La source de tension continue est connectée en série avec le disjoncteur 5 et la charge 6, par exemple par l'intermédiaire de connexions électriques de puissance, de façon connue en soi.

Le disjoncteur 5 comporte un pouvoir de coupure PdC et un courant de déclenchement Is. On pourra par exemple considérer le courant de déclenchement Is du disjoncteur 5 pour un déclenchement sur court-circuit avec une durée inférieure à 100 ms, afin de garantir une réponse rapide de l'installation électrique 1 à un court-circuit.

Dans l'installation électrique 1, la somme des courants de court-circuit des batteries 3 est supérieure au pouvoir de coupure PdC du disjoncteur 5. Avec un nombre n de batteries 3 connectées en parallèle et désignées par un indice i, on désigne par Icci le courant de court-circuit d'une batterie i. Le pouvoir de coupure PdC vérifie alors l'inégalité suivante :

$$PdC < \sum_{i=1}^{n} Icc_i$$

L'invention s'avère particulièrement avantageuse lorsqu'au moins 10 batteries 3 sont connectées en parallèle. L'invention s'avère en outre particulièrement avantageuse lorsque les batteries 3 sont de type lithium ion, ces batteries présentant une résistance interne relativement réduite et par conséquent un courant de court-circuit élevé.

Dans un souci de simplification, on partira de l'hypothèse d'un ensemble de n batteries 3 présentant un même courant de court-circuit Icc. L'installation électrique vérifie ainsi la relation PdC< n * Icc.

Ainsi, si toutes les batteries 3 débitaient leur courant de court-circuit dans le disjoncteur 5, le disjoncteur 5 ne pourrait pas garantir son ouverture. Le courant de court-circuit d'une batterie 3 correspond au courant maximum qu'elle est capable de débiter avec une résistance nulle entre ces bornes, ce courant étant alors limité uniquement par l'impédance interne de cette batterie 3.

L'invention s'avère particulièrement avantageuse lorsque le courant que pourrait débiter l'ensemble des batteries 3 est très supérieur au pouvoir de coupure du disjoncteur 5. Ainsi, l'invention s'avère particulièrement avantageuse lorsque la relation suivante est vérifiée :

$$PdC < 3 * \sum_{i=1}^{n} Icc_i$$

Chaque batterie 3 comprend un ensemble d'accumulateurs électrochimiques 300 connectés en série et/ou en parallèle. Dans la variante de la figure 1, chacune des batteries 3 connectées en parallèle comporte un interrupteur commandé 310. L'interrupteur commandé 310 d'une batterie 3 est connecté en série avec l'ensemble d'accumulateurs 300, entre les bornes de cette batterie 3. L'interrupteur 310 est donc susceptible d'ouvrir la connexion entre la batterie 3 et le disjoncteur 5.

L'installation électrique 1 comprend en outre un circuit de commande 2. Le circuit de commande 2 est configuré pour maintenir les interrupteurs 310 fermés dans un mode de fonctionnement normal d'alimentation de la charge 6. Le circuit de commande 2 est configuré pour ouvrir certains interrupteurs 310 dans certaines conditions de fonctionnement. Sur la base du courant mesuré par l'ampèremètre 4, le circuit de commande 2 détecte lorsque le courant traversant le disjoncteur 5 est supérieur à son courant de déclenchement Is et passe alors dans un mode de fonctionnement de court-circuit.

Dans le mode court-circuit, le circuit de commande 2 commande l'ouverture de plusieurs interrupteurs 310 et commande la fermeture d'autres interrupteurs 310 de façon à garantir que le courant traversant le disjoncteur 5 (somme des courants débités par les batteries 3 en parallèle) vérifie les inégalités suivantes :

$$Is < \sum Icc_i < PdC$$

Les batteries 3 dont l'interrupteur 310 reste fermé fournissent un courant qui peut monter jusqu'à leur courant de court-circuit. Une telle commande garantit ainsi que les batteries 3 fournissent un courant suffisamment élevé pour que son maintien conduise à l'ouverture du disjoncteur 5, et un courant suffisamment faible pour que le disjoncteur 5 soit apte à s'ouvrir. Le disjoncteur 5 est dimensionné de sorte que son pouvoir de coupure reste supérieur à la somme des courants de court-circuit des batteries 3 dont l'interrupteur 310 reste fermé suite au passage en mode de fonctionnement court-circuit. Les interrupteurs 310 devant potentiellement être traversés par le courant de court-circuit de leur batterie 3, ces interrupteurs seront avantageusement dimensionnés pour un courant en mode impulsionnel égal à ce courant de court-circuit pendant la durée maximale de court-circuit.

Pour une commande simplifiée par le circuit 2 lors de la détection du dépassement du courant de déclenchement Is, celui-ci maintient en continu :

- un nombre x d'interrupteurs 310 ouverts ; et
- un nombre (n-x) d'interrupteurs 310 fermés.

On peut cependant également envisager que le circuit 2 réalise une permutation des interrupteurs 310 ouverts et fermés, tout en maintenant x interrupteurs 310 ouverts et (n-x) interrupteurs fermés lors de la détection du dépassement du courant de déclenchement Is.

Une tolérance aux défauts d'un certain nombre de d'interrupteurs 310 peut d'ailleurs être assurée à la fois par la redondance naturelle du système, du fait :

- du nombre de batteries 3 en parallèle ;
- de la marge gardée lors du dimensionnement entre le pouvoir de coupure du disjoncteur 5 et la somme des courants de court-circuit des batteries 3 dont l'interrupteur 310 reste fermé.

Selon un exemple, 100 batteries 3 sont connectées en parallèle et ont chacune un courant de court-circuit de 5 kA. La somme des courants de court-circuit des batteries 3 est donc de 500 kA. L'installation électrique 1 comporte un disjoncteur 5 ayant un pouvoir de coupure PdC de 100 kA, donc inférieur à la somme des courants de court-circuit des batteries 3. Lorsque le circuit de commande 2 passe en mode court-circuit, il commande par exemple l'ouverture de 90 interrupteurs 310 et la fermeture de 10 interrupteurs 310. Le courant de court-circuit maximum pouvant traverser le disjoncteur 5 est donc de 50 kA, soit inférieur au pouvoir de coupure PdC. Ce courant de court-circuit maximum est également supérieur à un courant de déclenchement du disjoncteur 5.

L'ouverture des interrupteurs 310 doit être réalisée avant qu'un court-circuit n'induise un courant à travers le disjoncteur 5 supérieur à son pouvoir de coupure. Avec des inductances internes des batteries 3 de l'ordre

de quelque μH et des inductances du reste de l'installation électrique 1 compris entre quelque μH et quelques dizaines de μH, le temps de montée du courant de court-circuit peut être compris entre 10 μs et quelques centaines de μs sur certaines installations électriques. Des exemples d'interrupteurs 310 susceptibles de réaliser une ouverture dans ce délai sont détaillés par la suite.

La figure 2 est une représentation schématique d'un deuxième mode de réalisation d'une installation électrique 1 selon l'invention. L'installation 1 reprend l'architecture du premier mode de réalisation et diffère du premier mode de réalisation par la structure des batteries et par le mode de commande du circuit 2. Les batteries 3 du premier mode de réalisation sont remplacées par plusieurs batteries 3A et au moins une batterie 3B connectées en parallèle.

Chaque batterie 3A comprend un ensemble d'accumulateurs électrochimiques 300 connectés en série et/ou en parallèle. Chacune des batteries 3A comporte un interrupteur commandé 310. L'interrupteur commandé 310 d'une batterie 3A est connecté en série avec l'ensemble d'accumulateurs 300, entre les bornes de cette batterie 3A. L'interrupteur 310 est donc susceptible d'ouvrir la connexion entre la batterie 3A et le disjoncteur 5.

Chaque batterie 3B comprend entre ses bornes un ensemble d'accumulateurs électrochimiques 300 connectés en série et/ou en parallèle. Chaque batterie 3B est dépourvue d'interrupteur commandé pour ouvrir la connexion entre elle et le disjoncteur 5.

La somme des courants de court-circuit des batteries 3A et 3B est supérieure au pouvoir de coupure PdC du disjoncteur 5.

Le circuit de commande 2 est configuré pour maintenir les interrupteurs 310 des batteries 3A fermés dans le mode de fonctionnement normal d'alimentation de la charge 6. Le circuit de commande 2 est configuré pour passer en mode court-circuit lorsque le courant mesuré par l'ampèremètre 4 est supérieur au courant de déclenchement Is du disjoncteur 5. En mode court-circuit, le circuit de commande 2 ouvre les interrupteurs 310 des batteries 3A. Seules les batteries 3B fournissent alors le courant traversant le disjoncteur 5. Avec une répartition appropriée entre le nombre de batteries 3A et de batteries 3B, en mode de court-circuit, le courant traversant le disjoncteur 5 vérifie les inégalités suivantes :

$$\text{Is} < \sum_{i=1}^{n} Icc_i < \text{PdC}$$

Dans le deuxième mode de réalisation, comme les batteries 3A sont destinées à s'ouvrir presque instantanément en mode de court-circuit, les interrupteurs 310 sont traversés par un courant inférieur au courant de court-circuit pendant un temps très bref avant leur ouverture. Par conséquent, les interrupteurs 310 peuvent être dimensionnés pour un courant nominal nettement inférieur au courant de court-circuit de leur batterie. Par ailleurs, les batteries 3B étant dépourvues d'interrupteurs 310, le coût des batteries 3A et 3B du deuxième mode de réalisation (notamment induit par le dimensionnement et le refroidissement des interrupteurs 310) est contenu.

La figure 3 est une représentation schématique d'une variante de batterie 3 munie d'un interrupteur 310. Cette batterie 3 comprend des premiers accumulateurs électrochimiques 301 connectés en série et un convertisseur continu/continu 37. Une autre source de tension continue est connectée sur l'entrée du convertisseur 37. Cette autre source de tension continue comprend ici des seconds accumulateurs électrochimiques 302. La sortie du convertisseur 37 est connectée électriquement en série avec les accumulateurs électrochimiques 301.

Une telle batterie 3 permet d'adapter sa tension à la tension des autres batteries auxquelles elle doit être connectée en parallèle. De telles batteries s'avèrent particulièrement avantageuses lorsqu'elles présentent des caractéristiques différentes (du fait d'un état de charge, de dispersions de fabrication, d'un âge ou d'une usure différents). Une telle batterie 3 permet par ailleurs d'adapter sa tension avec des pertes réduites, pour un coût et un encombrement optimisés. En effet, la conversion n'est ici réalisée que sur la tension des accumulateurs électrochimiques 302, dont la tension nominale est typiquement au moins cinq fois inférieure à la tension nominale des accumulateurs électrochimiques 301.

Le convertisseur 37 est ici basé sur l'utilisation d'interrupteurs 321 et 322 et d'une inductance 350. Les interrupteurs 321 et 322 sont connectés en série et commandés par un circuit de commande 330. L'inductance 350 est connectée entre une borne de sortie de la batterie 3 et un noeud de connexion entre les interrupteurs 321 et 322. L'inductance 350 est connectée au noeud de connexion entre les interrupteurs 321 et 322 par l'intermédiaire de l'interrupteur 310. Un ampèremètre 340 mesure le courant traversant l'interrupteur 310 et l'inductance 350. L'interrupteur 310 peut être disposé à tout emplacement sur la connexion série entre le noeud de connexion et la borne de sortie de la batterie 3. L'ensemble d'accumulateurs électrochimiques 302 est connecté au noeud de connexion par l'intermédiaire respectivement de l'interrupteur 321 et de l'interrupteur 322.

On désigne par α le rapport cyclique de fermeture de l'interrupteur 321 défini par le circuit de commande 330. Le circuit de commande 330 définit un rapport cyclique de fermeture de l'interrupteur 322 de (1-α). De façon connue en soi, le circuit de commande maintient l'interrupteur 321 ouvert et l'interrupteur 322 fermé en simultané, et réciproquement. Le circuit de commande 330 définit la valeur du rapport cyclique α en fonction de la tension de sortie souhaitée pour la batterie 3.

Le convertisseur 37 est donc abaisseur de tension en mode de décharge des accumulateurs 302 et élévateur de tension en mode de charge des accumulateurs 302.

D'autres variantes de convertisseur 37 peuvent bien entendu être utilisées, telles que celles détaillées dans la demande de brevet PCT/EP2012/072607.

L'inductance 350 permet de ralentir l'augmentation du courant en cas de court-circuit. Afin d'éviter une saturation, l'inductance 350 sera avantageusement une inductance à air.

Pour faciliter la manipulation et la fabrication des batteries, des accumulateurs électrochimiques 302 et des accumulateurs électrochimiques 301 peuvent être réalisés sous forme de modules indépendants connectés électriquement en série.

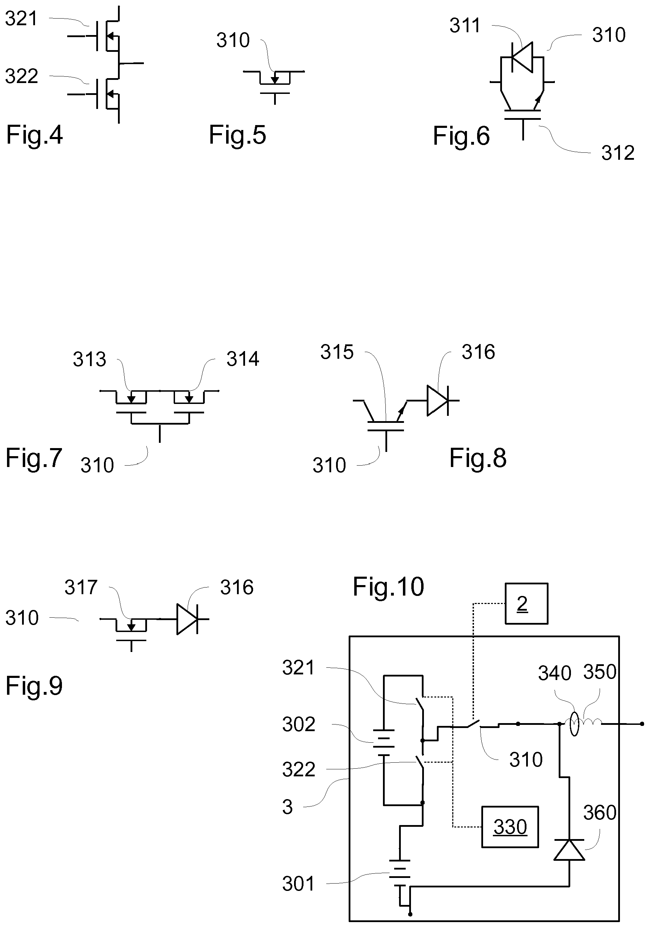

Les interrupteurs 321 et 322 du convertisseur 37 sont de préférence du type normalement ouvert. La figure 4 illustre un premier exemple d'interrupteurs 321 et 322 pouvant être utilisés dans le convertisseur 37. Les interrupteurs 321 et 322 sont ici des transistors Mos canal N connectés en série.

Différents types de transistors pourront être utilisés comme composants de conduction/coupure pour la fonction d'interrupteur 310. L'utilisation de transistors permet notamment d'obtenir des vitesses d'ouverture suffisamment rapides des interrupteurs 310 avant que l'intensité traversant le disjoncteur 5 n'atteigne son pouvoir de coupure. Pour une batterie devant fournir une puissance limitée, on limitera les pertes par l'utilisation d'un transistor de type Mosfet surdimensionné (pertes sensiblement proportionnelles au carré de l'intensité). Pour une batterie devant fournir une puissance importante, on limitera les pertes par l'utilisation d'un transistor de type IGBT (pertes sensiblement proportionnelles à l'intensité). La figure 6 illustre un premier exemple de transistor 312 utilisable comme interrupteur 310, avec une diode 311 en antiparallèle.

Lorsque l'interrupteur 310 inclut un unique transistor Mos de conduction comme dans la variante de la figure 5, celui-ci présente également une diode intrinsèque parasite dont la cathode est connectée au noeud de connexion entre les transistors 321 et 322, et donc à l'anode de la diode parasite du transistor 321. Si une autre batterie 3 connectée en parallèle présente une tension de sortie supérieure, il existe un risque que le transistor 321 soit traversé par un courant inverse même lorsqu'on commande son ouverture.

Lorsque l'interrupteur 310 inclut un unique transistor IGBT de conduction avec une diode en antiparallèle comme dans la variante de la figure 6, la cathode de la diode 311 est connectée au noeud de connexion entre les transistors 321 et 322, et donc à l'anode de la diode parasite du transistor 321. Il existe un risque que le transistor 321 soit traversé par un courant inverse même lorsqu'on commande son ouverture.

Une première solution à ce problème peut être de découpler les batteries 3 (par exemple par des contacteurs) tant que leurs niveaux de tension respectifs ne sont pas dans une même plage. Une autre solution à ce problème peut être d'utiliser d'autres types d'interrupteurs 310, tels qu'illustrés en référence aux figures 7 à 9.

L'interrupteur 310 de la variante de la figure 7 comporte deux transistors Mos canal N 313 et 314 montés tête-bêche et dont la grille est commandée par le circuit de commande 2. Un tel interrupteur 310 apporte ainsi une protection en tension inverse, au détriment de pertes de conduction en fonctionnement normal. Cette solution permet en outre de commander une recharge des accumulateurs électrochimiques 301 par récupération d'énergie provenant de la charge 6 ou par une batterie en parallèle qui présenterait une tension plus élevée.

En l'absence de recharge des accumulateurs 301 par un courant provenant de la charge 6, par exemple si les batteries 3 sont munies d'un autre dispositif de recharge, les variantes d'interrupteurs 310 des figures 8 et 9 peuvent être utilisées. Dans la variante de la figure 8, l'interrupteur 310 comporte un IGBT 315 (on peut également le remplacer par un transistor bipolaire) connecté en série avec une diode 316. Dans la variante la figure 9, l'interrupteur 310 comporte un transistor MOS canal N 317 connecté en série avec une diode 316. La cathode de ces diodes 316 est connectée à la borne haute tension de la batterie 3. Les interrupteurs 310 de ces deux variantes assurent ainsi une protection en tension inverse.

Les interrupteurs 310 doivent dissiper l'énergie d'inductances parasites en série lors de leur ouverture. Pour faciliter cette dissipation, on peut envisager de limiter la vitesse de commutation des interrupteurs 310, ou de munir les interrupteurs 310 d'écrêteurs respectifs, par exemple une diode zener connectée en parallèle.

La figure 10 est une représentation schématique d'une autre variante d'une batterie 3, destinée à la mise en oeuvre d'un troisième mode de réalisation d'une installation électrique 1 selon l'invention. La variante de la figure 10 se distingue de la variante de la figure 3 uniquement en ce qu'elle comporte une diode 360 dont l'anode est connectée à la borne basse tension de la batterie 3 et dont la cathode est connectée à un noeud entre l'inductance 350 et l'interrupteur 310. La diode 360 a une fonction de diode de roue libre. Comme dans la variante de la figure 3, l'ampèremètre 340 mesure le courant traversant l'inductance 350.

En présence d'un court-circuit, le circuit de commande 330 détecte l'augmentation du courant par l'intermédiaire de l'ampèremètre 340. Le circuit de commande 330 contrôle alors l'interrupteur en modulation de largeur d'impulsion pour réguler le courant traversant l'inductance 350. Durant les phases d'ouverture de l'interrupteur 310, la diode de roue libre 360 est conductrice. On peut prévoir que (n-1) interrupteurs 310 des n batteries 3 connectées en parallèle soient maintenus ouverts en mode de court-circuit. On peut aussi prévoir que (n-x-1) interrupteurs 310 soient maintenus ouverts et que x interrupteurs 310 soient maintenus fermés en mode de court-circuit. Un dernier interrupteur 310 est commandé en ouverture par son circuit de commande 330 ou par le circuit de commande 2, avec un rapport cyclique permettant de réguler le courant à travers l'inductance 350 et donc à travers le disjoncteur 5. Le courant traversant l'inductance 350 est par exemple maintenu par le circuit de commande 330 à un niveau garantissant un courant à travers le disjoncteur 5 inférieur à son pouvoir de coupure. Le courant traversant l'inductance 350 est également maintenu à un niveau garantissant un courant à travers le disjoncteur 5 supérieur à son courant de déclenchement. On peut ainsi réguler le courant traversant le disjoncteur à un niveau contrôlé par rapport à son courant de déclenchement. En maintenant un courant juste nécessaire à déclencher le disjoncteur 5, on augmente la durée de vie de celui-ci face à des court-circuits répétés.

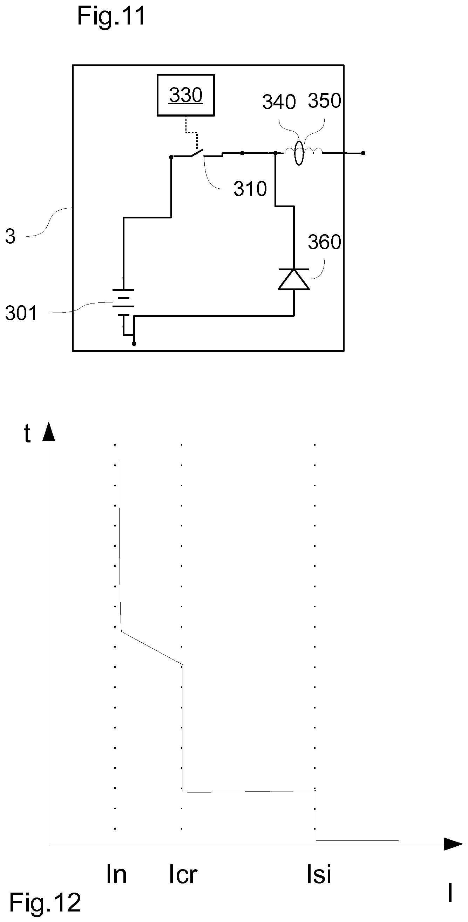

La figure 11 est une représentation schématique d'une autre variante d'une batterie 3, destinée à la mise en oeuvre du troisième mode de réalisation d'une installation électrique 1 selon l'invention. La variante de la figure 11 se distingue de la variante de la figure 10 par l'absence de structure de convertisseur 37. Comme dans la variante de la figure 10, cette variante permet d'assurer la régulation du courant traversant le disjoncteur 5 en régulant le courant débité par une batterie 3 et en maintenant ouverts plusieurs interrupteurs 310 d'autres batteries 3.

Le disjoncteur 5 est par exemple un disjoncteur magnétothermique ou un disjoncteur électronique. Un disjoncteur électronique est muni :

- d'un ampèremètre mesurant le courant le traversant ;
- d'un organe électromécanique permettant l'ouverture entre les bornes du disjoncteur ;
- d'un circuit électronique traitant la mesure de courant de l'ampèremètre et générant un ordre d'ouverture de l'organe électromécanique en fonction de la mesure de courant.

La figure 12 illustre un exemple de diagramme de déclenchement d'un tel disjoncteur électronique. Le disjoncteur électronique comporte ici trois seuils de déclenchement :

- le premier seuil de déclenchement In pour une surcharge de courant limité mais de longue durée (typiquement entre plusieurs dizaines de secondes et plusieurs minutes). Ce seuil de déclenchement est analogue au seuil de déclenchement thermique d'un disjoncteur magnétothermique ;
- le deuxième seuil de déclenchement Icr pour une surcharge de courant relativement importante et de durée moyenne (typiquement entre 100 ms et quelques secondes). Ce seuil de déclenchement est analogue au seuil de déclenchement magnétique d'un disjoncteur magnétothermique ;
- le troisième seuil de déclenchement Isi pour un court-circuit franc, avec une détection quasi instantanée et une ouverture intervenant moins de 100 ms après cette détection.

Le premier seuil de déclenchement du disjoncteur 5 peut être retardé pour permettre à des disjoncteurs de plus petit calibre d'ouvrir des branches en aval, afin de garantir la sélectivité du circuit électrique.

Le circuit de commande 2 et les batteries connectées en parallèle pourront être configurées pour débiter un courant supérieur au troisième seuil de déclenchement en mode de court-circuit, afin de conserver toute la fonctionnalité du disjoncteur 5.

**Revendications**

1. Installation électrique (1), comprenant :

   - un disjoncteur (5) présentant un pouvoir de coupure PdC et un courant de déclenchement Is;
   - un ampèremètre (4) mesurant le courant traversant le disjoncteur ;
   - une source de tension continue comprenant des batteries d'accumulateurs électrochimiques (3) connectées en parallèle, la source de tension étant connectée en série avec le disjoncteur,

   **Caractérisée en ce que**

   - la somme des courants de court-circuit des batteries connectées en parallèle est supérieure au pouvoir de coupure PdC du disjoncteur (5), plusieurs desdites batteries comportant un interrupteur respectif (310) susceptible d'ouvrir une connexion entre leur batterie et le disjoncteur;
   - l'installation électrique comprend un circuit de commande (2) configuré pour détecter que le courant traversant le disjoncteur (5) est supérieur au courant de déclenchement Is et configuré pour commander l'ouverture de plusieurs desdits interrupteurs (310) pour appliquer à travers le disjoncteur (5) un courant supérieur à son courant de déclenchement Is et inférieur à son pouvoir de coupure PdC lors de ladite détection.

2. Installation électrique (1) selon la revendication 1, dans laquelle chacune desdites batteries (3) connectées en parallèle comporte un desdits interrupteurs (310) respectif.

3. Installation électrique (1) selon la revendication 1, dans laquelle moins de la moitié desdites batteries (3) connectées en parallèle comportent un desdits interrupteurs (310) respectif.

4. Installation électrique selon l'une quelconque des revendications précédentes, dans laquelle une desdites batteries (3) comporte un ampèremètre mesurant le courant traversant son interrupteur respectif (310) et comporte un circuit de commande (330) commandant l'ouverture de cet interrupteur pour réguler le courant traversant l'interrupteur à un niveau inférieur au courant de court-circuit maximal.

5. Installation électrique (1) selon l'une quelconque des revendications précédentes, dans laquelle le courant de déclenchement Is du disjoncteur (5) est un courant de déclenchement pour un court-circuit d'une durée inférieure à 100 ms.

6. Installation électrique (1) selon l'une quelconque des revendications précédentes, comprenant au moins 10 batteries (3) connectées en parallèle.

7. Installation électrique (1) selon l'une quelconque des revendications précédentes, comprenant un nombre n de batteries (3) connectées en parallèle, et dans laquelle ces batteries présentent chacune un courant de court-circuit $Icc_i$, le pouvoir de coupure PdC du disjoncteur (5) étant au moins 3 fois inférieur à la somme

$$\sum_{i=1}^{n} Icc_i$$

des courants de court-circuit de ces batteries.

8. Installation électrique selon l'une quelconque des revendications précédentes, dans laquelle chacun desdits interrupteurs (310) inclut un transistor (312) traversé par le courant débité par sa batterie respective.

9. Installation électrique (1) selon l'une quelconque des revendications précédentes, dans laquelle chacune desdites batteries (3) comprend un premier ensemble d'accumulateurs électrochimiques connectés en série et un deuxième ensemble d'accumulateurs électrochimiques connectés en série, l'installation électrique comprenant en outre un convertisseur continu/continu (37) dont la tension de sortie est connectée en série avec ledit premier ensemble d'accumulateurs électrochimiques (301), le deuxième ensemble d'accumulateurs électrochimiques (302) appliquant sa différence de potentiel sur une interface d'entrée du convertisseur (37).

10. Installation électrique (1) selon la revendication 9, dans laquelle ledit convertisseur (37) présente une structure d'abaisseur de tension lors de la décharge dudit deuxième ensemble d'accumulateurs électrochimiques (302).

11. Installation électrique (1) selon la revendication 10, dans laquelle :

- ladite structure d'abaisseur de tension inclut un abaisseur de tension à découpage comprenant deux interrupteurs commandés (321, 322) connectés en série et aux bornes desquels la différence de potentiel du deuxième ensemble d'accumulateurs électrochimiques (302) est appliquée ;
- ledit convertisseur (37) inclut :

- une inductance (350) connectée entre une première borne de l'interrupteur respectif (310) de la batterie et une première borne de sortie de la source de tension continue ;
- une diode de roue libre (360) connectée entre une deuxième borne de sortie de la source de tension continue et ladite première borne dudit interrupteur respectif ;

- la deuxième borne de l'interrupteur respectif (310) étant connectée à un noeud de connexion entre les interrupteurs commandés (321, 322) de l'abaisseur.

12. Installation électrique selon la revendication 11, dans laquelle lesdits interrupteurs respectifs comportent au moins un composant (316) de blocage du courant s'écoulant de ladite première borne vers ledit noeud de connexion entre lesdits deux interrupteurs commandés (321, 322).

13. Installation électrique selon l'une quelconque des revendications précédentes, dans laquelle le disjoncteur (5) présente un pouvoir de coupure au moins égal à 5kA.

**Patentansprüche**

1. Elektrische Anlage (1), umfassend:

- einen Trennschalter (5), der eine Unterbrechungskapazität PdC und einen Auslösestrom Is aufweist;
- ein Amperemeter (4), das den durch den Trennschalter fließenden Strom misst;
- eine Gleichspannungsquelle, umfassend elektrochemische Speicherbatterien (3), die parallel geschaltet sind, wobei die Spannungsquelle in Serie mit dem Trennschalter geschaltet ist,

**dadurch gekennzeichnet, dass**

- die Summe der Kurzschlussströme der parallel geschalteten Batterien größer als die Unterbrechungskapazität PdC des Trennschalters (5) ist, wobei mehrere der Batterien einen jeweiligen Schalter (310) umfassen, der geeignet ist, einen Anschluss zwischen ihrer Batterie und dem Trennschalter zu öffnen;
- wobei die elektrische Anlage eine Steuerschaltung (2) umfasst, die dazu vorgesehen ist zu erfassen, ob der durch den Trennschalter (5) fließende Strom größer als der Auslösestrom Is ist, und die dazu vorgesehen ist, das Öffnen mehrerer dieser Schalter (310) zu steuern, um über den Trennschalter (5) einen Strom größer als sein Auslösestrom Is und kleiner als seine Unterbrechungskapazität PdC bei der Erfassung anzulegen.

2. Elektrische Anlage (1) nach Anspruch 1, bei der jede der parallel geschalteten Batterien (3) einen der jeweiligen Schalter (310) umfasst.

3. Elektrische Anlage (1) nach Anspruch 1, bei der weniger als die Hälfte der parallel geschalteten Batterien (3) einen der jeweiligen Schalter (310) umfasst.

4. Elektrische Anlage nach einem der vorhergehenden Ansprüche, bei der eine der Batterien (3) ein Amperemeter umfasst, das den durch ihren jeweiligen Schalter (310) fließenden Strom misst, und eine Steuerschaltung (330) umfasst, die das Öffnen dieses Schalters steuert, um den durch den Schalter fließenden Strom auf ein Niveau unter dem maximalen Kurzschlussstrom zu regulieren.

5. Elektrische Anlage (1) nach einem der vorhergehenden Ansprüche, bei der der Auslösestrom Is des Trennschalters (5) ein Auslösestrom für einen Kurzschluss mit einer Dauer unter 100 ms ist.

6. Elektrische Anlage (1) nach einem der vorhergehenden Ansprüche, umfassend mindestens 10 parallel geschaltete Batterien (3).

7. Elektrische Anlage (1) nach einem der vorhergehenden Ansprüche, umfassend eine Anzahl n von parallel geschalteten Batterien (3), und bei der diese Batterien jeweils einen Kurzschlussstrom $Icc_i$ aufweisen, wobei die Unterbrechungskapazität PdC des Trennschalters (5) mindestens 3-mal geringer ist als die Summe

$$\sum_{i=1}^{n} Icc_i$$

der Kurzschlussströme dieser Batterien.

8. Elektrische Anlage nach einem der vorhergehenden Ansprüche, bei der jeder der Schalter (310) einen Transistor (312) einschließt, durch den der von seiner jeweiligen Batterie gelieferte Strom fließt.

9. Elektrische Anlage (1) nach einem der vorhergehenden Ansprüche, bei der jede der Batterien (3) eine erste Einheit von elektrochemischen Akkumulatoren, die in Serie geschaltet sind, und eine zweite Einheit von elektrochemischen Akkumulatoren, die in Serie geschaltet sind, umfasst, wobei die elektrische Anlage ferner einen Gleichspannungswandler (37) umfasst, dessen Ausgangsspannung in Serie mit der ersten Einheit von elektrochemischen Akkumulatoren (301) geschaltet ist, wobei die zweite Einheit von elektrochemischen Akkumulatoren (302) ihren Potentialunterschied an eine Eingangsschnittstelle des Wandlers (37) anlegt.

10. Elektrische Anlage (1) nach Anspruch 9, bei der der Wandler (37) eine Spannung senkende Struktur beim Entladen der zweiten Einheit von elektrochemischen Akkumulatoren (302) aufweist.

11. Elektrische Anlage (1) nach Anspruch 10, bei der:

- die Spannung senkende Struktur einen Abwärtswandler mit Schaltnetzteil einschließt, umfassend zwei gesteuerte Schalter (321, 322), die in Serie geschaltet sind, und an deren Klemmen der Potentialunterschied der zweiten Einheit von elektrochemischen Akkumulatoren (302) angelegt wird;
- der Wandler (37) einschließt:

  - eine Induktanz (350), die zwischen einer ersten Klemme des jeweiligen Schalters (310) der Batterie und einer ersten Ausgangsklemme der Gleichspannungsquelle angeschlossen ist;
  - eine Freilaufdiode (360), die zwischen einer zweiten Ausgangsklemme der Gleichspannungsquelle und der ersten Klemme des jeweiligen Schalters angeschlossen ist;

- wobei die zweite Klemme des jeweiligen Schalters (310) an einen Anschlussknoten zwischen den gesteuerten Schaltern (321, 322) des Abwärtswandlers angeschlossen ist.

12. Elektrische Anlage nach Anspruch 11, bei der die jeweiligen Schalter mindestens eine Komponente (316) zum Blockieren des Stroms, der von der ersten Klemme zu dem Anschlussknoten zwischen den beiden gesteuerten Schaltern (321, 322) fließt, umfassen.

13. Elektrische Anlage nach einem der vorhergehenden Ansprüche, bei der der Trennschalter (5) eine Unterbrechungskapazität mindestens gleich 5 kA aufweist.

**Claims**

1. Electrical installation (1) comprising:

   - a circuit-breaker (5) with a breaking capacity PdC and a tripping current Is;
   - an ammeter (4) for the measurement of the current flowing in the circuit-breaker;
   - a d.c. voltage source comprising electrochemical accumulator batteries (3) connected in parallel, whereby said voltage source is connected in series with the circuit-breaker,

   **Characterized in that**:

   - the sum of the short-circuit currents of the batteries connected in parallel is greater than the breaking capacity PdC of the circuit-breaker (5), whereby a plurality of said batteries comprise a respective switch (310) which is capable of opening a connection between their battery and the circuit-breaker;
   - the electrical installation comprises a control circuit (2) which is configured for the detection of a current flowing in the circuit-breaker (5) which exceeds the tripping current Is, and is configured to control the opening of a plurality of said switches (310) in order to ensure that the current flowing in the circuit-breaker (5) exceeds the tripping current Is thereof and is lower than the breaking capacity PdC thereof upon said detection.

2. Electrical installation (1) according to Claim 1, wherein each of said batteries (3) connected in parallel comprises one of said respective switches (310).

3. Electrical installation (1) according to Claim 1, wherein fewer than half of said batteries (3) connected in parallel comprise one of said respective switches (310).

4. Electrical installation according to any one of the preceding claims, wherein one of said batteries (3) comprises an ammeter for the measurement of the current flowing in its respective switch (310), and comprises a control circuit (330) for the control of the opening of this switch in order to regulate the current flowing in the switch to a level which is lower than the maximum short-circuit current.

5. Electrical installation (1) according to any one of the preceding claims, wherein the tripping current Is of the circuit-breaker (5) is a tripping current for a short-circuit of duration less than 100 ms.

6. Electrical installation (1) according to any one of the preceding claims, comprising at least 10 batteries (3) connected in parallel.

7. Electrical installation (1) according to any one of the preceding claims, comprising a number n of batteries (3) connected in parallel, wherein each of said batteries exhibits a short-circuit current $Icc_i$, and wherein the breaking capacity PdC of the circuit-breaker (5) is at least three times lower than the sum

$$\sum_{i=1}^{n} Icc_i$$

of the short-circuit currents of said batteries.

8. Electrical installation according to any one of the preceding claims, wherein each of said switches (310) incorporates a transistor (312) in which the current delivered by its respective battery flows.

9. Electrical installation (1) according to any one of the preceding claims, wherein each of said batteries (3) comprises a first combination of electrochemical accumulators connected in series, and a second combination of electrochemical accumulators connected in series, and wherein the electrical installation also comprises a d.c./d.c. converter (37) the output voltage of which is connected in series with said first combination of electrochemical accumulators (301), wherein the second combination of electrochemical accumulators (302) applies its potential difference to an input interface of the converter (37).

10. Electrical installation (1) according to Claim 9, wherein said converter (37) constitutes a voltage-reducing structure during the discharging of said second combination of electrochemical accumulators (302).

11. Electrical installation (1) according to Claim 10, wherein:

    - said voltage-reducing structure incorporates a stepdown switching regulator comprising two controlled switches (321, 322) connected in series and to the terminals of which the potential difference of the second combination of electrochemical accumulators (302) is applied;
    - said converter (37) incorporates:

      o an inductance (350) connected between a first terminal of the respective switch (310) of the battery and a first output terminal of the d.c. voltage source;
      o a free-wheeling diode (360) connected between a second output terminal of the d.c. voltage source and said first terminal of said respective switch;

- the second terminal of the respective switch (310) being connected to a connection node between the controlled switches (321, 322) of the reducer.

12. Electrical installation according to Claim 11, wherein said respective switches comprise at least one component (316) for the blocking of the current flowing from said first terminal to said connection node between said two controlled switches (321, 322)

13. Electrical installation according to any one of the preceding claims, wherein the circuit-breaker (5) has a breaking capacity at least equal to 5 kA.

Fig.1

Fig.2

Fig.3

Fig.4

Fig.5

Fig.6

Fig.7  310

Fig.8

Fig.9

Fig.10

## Fig.11

## Fig.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0810710 A
- WO 2011076257 A
- WO 2012171917 A
- EP 2012072607 W